# EUROPEAN PATENT APPLICATION

(11) **EP 4 049 576 A1**
(43) Date of publication of application: **31.08.2022**
(21) Application number: 19949585.4
(22) Date of filing: 22.11.2019
(51) Int. Cl.: A47L 11/28, H02J 7/00

(54) **SWEEPER CONTROL METHOD AND CONTROLLER**

(30) Priority: 22.10.2019 CN 201911007325
(71) Applicant: Dreame Innovation Technology (Suzhou) Co., Ltd., Suzhou, Jiangsu 215104 (CN)
(72) Inventor: XU, Yinbo, Suzhou, Jiangsu 215104 (CN); SUN, Jiajia, Suzhou, Jiangsu 215104 (CN); LIU, Rui, Suzhou, Jiangsu 215104 (CN)
(74) Representative: dompatent von Kreisler Selting Werner - Partnerschaft von Patent- und Rechtsanwälten mbB
(86) International application number: PCT/CN2019/120431
(87) International publication number: WO 2021/077527

(57) **Abstract**

The present invention discloses a control method and a controller for a cleaning robot including: obtaining a remaining power or a charging instruction of the cleaning robot; and controlling liquid discharge of a liquid container of the cleaning robot according to the remaining power or the charging instruction. When the liquid container stops discharging liquid, the cleaning robot is controlled to stop working or to charge after running for a preset time. The control method of controlling residual moisture of a rag of the cleaning robot when the cleaning robot is charged can effectively avoid damage to a ground caused by the residual moisture on the rag when the cleaning robot is charging.

## Description

### TECHNICAL FIELD

The present invention relates to a technical field of cleaning robots, and in particular to a control method and a controller for the cleaning robot.

### BACKGROUND

Cleaning robots, also known as automatic sweeping machines, are smart household appliances which have become popular all over the world in recent years. With a certain amount of artificial intelligence, the cleaning robot adopts brush sweeping and vacuum methods to first absorb ground debris into its own garbage storage box. Then, the cleaning robot wipes with a moistened rag to automatically complete the floor cleaning work in a room. When the cleaning robot is working, but the power is lower than a power threshold, the cleaning robot needs to return to a charging base for charging. The rag of the cleaning robot is damp when cleaning a floor. When charging, the moistened rag is often directly placed on the floor, which causes liquid to accumulate on a part of the floor. Especially for a wooden floor, the floor will be damaged in severe cases, which will cause inconvenience to users. Therefore, it is necessary to study a control method and a controller for a cleaning robot.

### SUMMARY

In view of the shortcomings in the above-mentioned technologies, the present invention provides a control method and a controller for a cleaning robot, which can effectively avoid damage to a ground caused by residual moisture on a rag when the cleaning robot is charging.

A technical solution adopted by the present invention to solve its technical problems is:
on one hand, the present invention provides a control method for a cleaning robot, including:
obtaining a remaining power or a charging instruction of the cleaning robot; and
controlling liquid discharge of a liquid container of the cleaning robot according to the remaining power or the charging instruction;
wherein when the liquid container stops discharging liquid, the cleaning robot is controlled to stop working or to charge after running for a preset time.

Preferably, controlling liquid discharge of the liquid container according to the remaining power includes:
when the remaining power is lower than a first preset power, the liquid discharge of the liquid container decreases as the remaining power decreases.

Preferably, when the remaining power is lower than a second preset power, the liquid container is controlled to stop the liquid discharge; and wherein the second preset power is lower than the first preset power.

Preferably, controlling liquid discharge of the liquid container according to the remaining power includes:
when the remaining power is lower than a second preset power, the liquid container stops discharging liquid.

Preferably, when the liquid container stops discharging liquid, a liquid discharging time of a last liquid discharging from the liquid container is obtained, and a running time of the cleaning robot after the liquid container stops discharging liquid is determined according to the liquid discharging time.

On the other hand, the present invention provides a controller for a cleaning robot, including:
an obtaining unit, the obtaining unit being adapted to obtain a remaining power or a charging instruction of the cleaning robot;
a control unit, the control unit being adapted to control liquid discharge of a liquid container of the cleaning robot according to the remaining power or the charging instruction;
wherein when the liquid container stops discharging liquid, the cleaning robot is controlled to stop working or to charge after running for a preset time.

Preferably, the controller is configured to control the liquid discharge of the liquid container to decrease as the remaining power decreases, when the remaining power is lower than a first preset power.

Preferably, the controller is further configured to control the liquid container to stop the liquid discharge, when the remaining power is lower than a second preset power; and wherein the second preset power is lower than the first preset power.

Preferably, the controller is configured to control the liquid container to stop the liquid discharge when the remaining power is lower than a second preset power.

Preferably, the controller is further configured to obtain a liquid discharging time of a last liquid discharge from the liquid container and determine a running time of the cleaning robot after the liquid container stops discharging liquid according to the liquid discharging time, when the liquid container stops discharging liquid.

Compared with the prior art, the present invention has the following beneficial effects: the control method and the controller for the cleaning robot provided by the present invention detect the remaining power of the cleaning robot to determine whether the remaining power is lower than the preset power; if the remaining power is lower than the preset power, the liquid discharge of the liquid container is controlled until the liquid is stopped; then, the cleaning robot is set to a cleaning mode, so that the rag of the cleaning robot will continue to work for a period of time without liquid from the liquid container; and finally, the cleaning robot is set to return to a charging mode and the cleaning robot is controlled to return to a charging base for charging. This can effectively avoid damage to the ground caused by residual moisture on the rag when the cleaning robot is charging. The present invention has advantages of simple operation and convenient use.

### BRIEF DESCRIPTION OF DRAWINGS

FIG. 1 is a first flowchart of a control method and a controller for a cleaning robot of the present invention;
FIG. 2 is a second flow chart of the control method and the controller for the cleaning robot of the present invention;
FIG. 3 is a third flow chart of the control method and the controller for the cleaning robot of the present invention;
FIG. 4 is a fourth flow chart of the control method and the controller for the cleaning robot of the present invention; and
FIG. 5 is a structural diagram of the controller for the cleaning robot of the present invention.

### DETAILED DESCRIPTION

The present invention will be further described in detail below with reference to the accompanying drawings, so that those skilled in the art can implement it with reference to the content of the description.

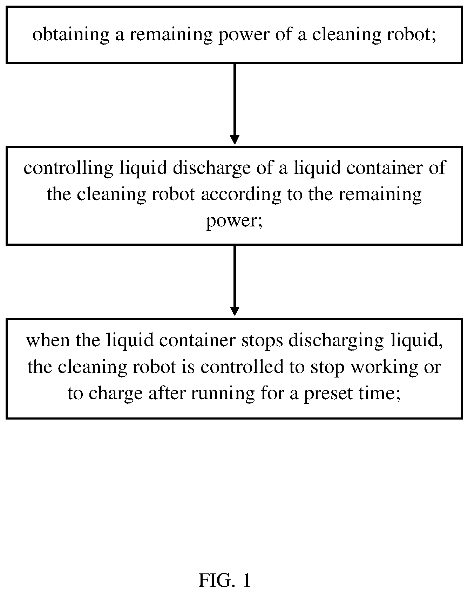

As shown in FIG. 1, the present invention discloses a control method for a cleaning robot including:
step 1: obtaining a remaining power of the cleaning robot;
step 2: controlling liquid discharge of a liquid container of the cleaning robot according to the remaining power; Among them, a liquid pump is provided in the liquid container. The liquid discharge of the liquid container is controlled by controlling the liquid pump. The liquid pump can work continuously or discontinuously;
step 3: when the liquid container stops discharging liquid, controlling the cleaning robot to stop working or to charge after running for a preset time. The preset time here can be a time value set by engineers before the cleaning robot leaves a factory, or a time value set by users according to their own usage.

Using the above method, the cleaning robot can effectively use up the liquid on the rag before stopping work or to charge, and keep the rag as dry as possible so as to protect the floor to the greatest extent.

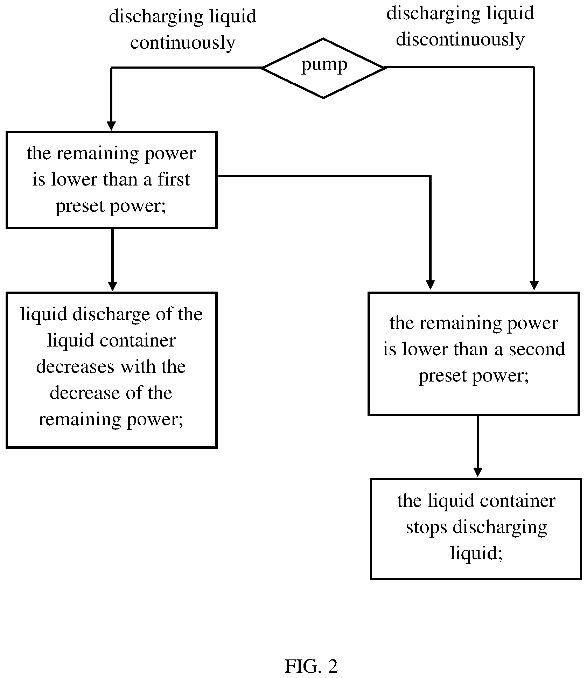

As shown in FIG. 2, in an embodiment, when the cleaning robot is working and the liquid pump is discharging liquid continuously, and when it is detected that the remaining power of the cleaning robot is lower than a first preset power, the liquid discharge of a liquid container decreases as the remaining power decreases. That is, by controlling the pumping liquid volume of the liquid pump, the flow rate of the liquid pump is reduced, and then the liquid discharge is controlled. The first preset power here may be 20% of the full power. It should be noted that the value "20%" here is just an example, which is not be adapted to limit the scope. Furthermore, as the power continues to drop, the liquid on a rag is also constantly decreasing. When the remaining power is lower than a second preset power, the liquid container is controlled to stop liquid discharge. The second preset power is lower than the first preset power, for example, the second preset power here may be 15% of the full power. Same as above, the value here is just an example, which is not be adapted to limit the scope. When the battery level of the cleaning robot is lower than 15% of the full power, it means that the cleaning robot needs to be charged. After continuing to control the cleaning robot to work for a period of time so as to use up the liquid on the rag as much as possible, the cleaning robot then returns for charging.

As shown in FIG. 2, in another embodiment, when the liquid pump is discharging liquid discontinuously, when the remaining power is lower than the second preset power, the liquid container stops discharging liquid. When the liquid container stops discharging liquid, a liquid discharging time of a last liquid container discharging is obtained, and an operating time of the cleaning robot after the liquid container stops discharging liquid according to the liquid discharge time is determined. Specifically, if the last time the liquid is discharged is longer than the time the liquid container is controlled to stop, it means that part of the liquid on the rag has been consumed, as a result of that the cleaning robot can be controlled to continue to work for a shorter time. If the last time the liquid is discharged is shorter than the time the liquid containered is controlled to stop, it means that the humidity of the rag is high, as a result of that the cleaning robot needs to be controlled to continue to work for a longer time before charging.

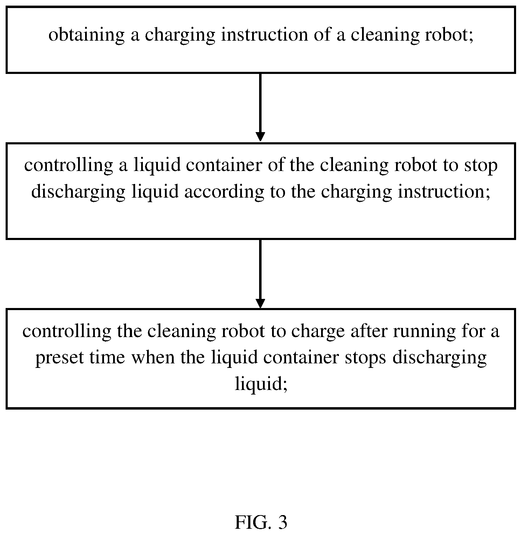

As shown in FIG. 3, in another embodiment of the present invention, a control method for a cleaning robot includes:
obtaining a charging instruction of the cleaning robot; and
controlling the liquid container of the cleaning robot to stop liquid discharge according to the charging instruction;
when the liquid container stops discharging liquid, the cleaning robot is controlled to charge after running for a preset time. In this solution, after the cleaning robot is cleaned, if there is still a lot of power, the cleaning robot must be charged according to the charging instruction. By adopting the above method, the residual moisture on the rag can be effectively consumed, so that the floor can be effectively protected.

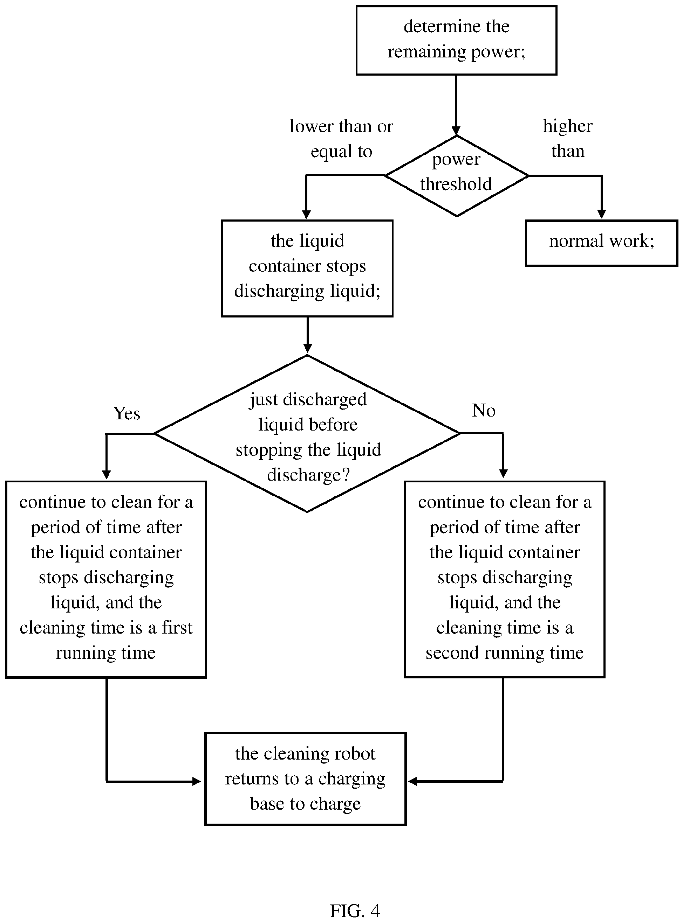

As shown in FIG. 4, the control method for the cleaning robot will be described in detail. The control method includes: step 1: checking the remaining power of the cleaning robot, and determining the remaining power and the power threshold; if the remaining power is lower than the power threshold, controlling the liquid container to stop discharging liquid; step 2: setting the cleaning robot to a cleaning mode, so that the rag of the cleaning robot will continue to work for a period of time without liquid being discharged from the liquid container; step 3: setting the cleaning robot to return to a charging mode, and controlling the cleaning robot to return to the charging base for charging. In this solution, before the cleaning robot returns for charging, the cleaning robot is allowed to continue cleaning for a period of time without liquid being discharged from the liquid container, so that most of the moisture on the rag remains on the ground that has just been dragged. At this time, there is little residual moisture on the rag, and it is not easy to cause damage to the ground, which has the advantages of simple operation and convenient use. In the step 1, after the liquid container is controlled to stop discharging liquid, surrounding environment images are firstly collected, then the surrounding environment images are recognized, and then working environment state parameters are obtained in order to determine whether the cleaning robot is in a working environment. That is, the type of ground on which the cleaning robot is traveling is detected. If the cleaning robot is in a preset working environment, the work content in step 2 is executed. If the cleaning robot is in a non-working environment, the cleaning robot is controlled to run to the working environment and then execute the work content in step 2. In this solution, the working environment of the cleaning robot refers to a cleaning environment when the floor type is a floor tile or a wooden floor. The non-working environment refers to a cleaning environment when the floor type is a carpet. Through an image acquisition analyzer, a cleaning robot bump signal detection and a speed signal detection, the type of ground on which the cleaning robot is traveling can be obtained. The cleaning robot bump signal detection is adapted to detect bump signals during a sweeping process. The speed signal detection is adapted to detect a moving speed of the cleaning robot. In step 1, after the liquid container is controlled to stop discharging liquid, the liquid remaining in a flow channel connected with the rag is sucked back into the liquid container through the pump, so as to prevent the liquid remaining in the flow channel from supplying liquid to the rag. In step 2, it is first necessary to determine whether the liquid container has just discharged liquid before the liquid container stops in step 1, so as to determine the time for the cleaning robot to continue to work without liquid being discharged from the liquid container. If the liquid container in step 1 has just discharged liquid before stopping the liquid discharge, the running time of the rag of the cleaning robot in the state that the liquid container does not discharge liquid is extended, and the running time is defined as a first running time. If the liquid container in step 1 has not been discharged liquid before stopping the liquid discharge, the rag of the cleaning robot is controlled to work according to a preset standard time when the liquid container is not discharged, and the preset standard time is defined as a second running time. The first running time is greater than the second running time, and the time difference between the first running time and the second running time is 1 to 3 minutes. This is because if the liquid is discharged just before the liquid container stops discharging, the humidity of the rag will be higher and there will be more residual moisture. Therefore, it takes more time to remove the residual moisture on the rag. In step 3, the cleaning robot firstly controls the cleaning robot to return to the charging base for charging by recognizing the surrounding environment image. The charging base is provided with a position sensor for sensing whether the cleaning robot returns. The charging base is also provided with a detection unit and an alarm unit connected with the detection unit. The detection unit is adapted to detect a return channel of the cleaning robot. The alarm unit is adapted to send out an alarm signal when there is an obstacle in the return channel which prevents the cleaning robot from mating and charging.

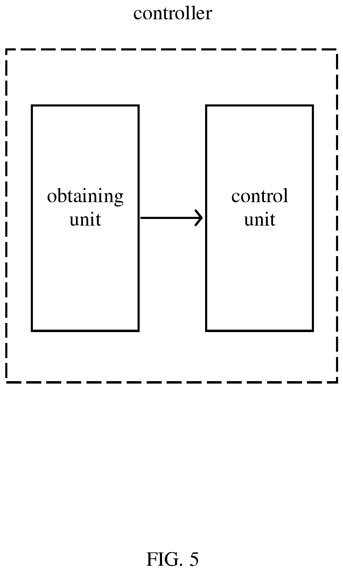

As shown in FIG. 5, the present invention also provides a controller for the cleaning robot. The controller is an electronic component including:
an obtaining unit which is adapted to obtain the remaining power of the cleaning robot; and
a control unit which is adapted to control liquid discharge of the liquid container of the cleaning robot according to the remaining power. When the liquid container stops discharging liquid, the cleaning robot is controlled to stop working or to charge after running for a preset time.

In an embodiment, the controller is configured to control the liquid discharge of the liquid container to decrease as the remaining power decreases, when the remaining power is lower than the first preset power. Furthermore, the controller is further configured to control the liquid container to stop discharging liquid when the remaining power is lower than the second preset power. The second preset power is lower than the first preset power.

In another embodiment, the controller is configured to control the liquid container to stop liquid discharge when the remaining power is lower than the second preset power. Furthermore, the controller is further configured to obtain the liquid discharging time of the last liquid discharging from the liquid container and determine the running time of the cleaning robot after the liquid container stops discharging liquid according to the liquid discharging time, when the liquid container stops discharging liquid.

Although the embodiments of the present invention have been disclosed as above, they are not limited to the applications listed in the specification and the embodiments, and it can be applied to various fields suitable for the present invention. For those skilled in the art, additional modifications can be easily implemented. Therefore, without departing from the general concept defined by the claims and equivalent scope, the present invention is not limited to the specific details and the legends shown and described here.

## Claims

1. A control method for a cleaning robot, comprising:
obtaining a remaining power or a charging instruction of the cleaning robot; and
controlling liquid discharge of a liquid container of the cleaning robot according to the remaining power or the charging instruction;
wherein when the liquid container stops discharging liquid, the cleaning robot is controlled to stop working or to charge after running for a preset time.

2. The control method according to claim 1, wherein controlling liquid discharge of the liquid container according to the remaining power comprises:
when the remaining power is lower than a first preset power, the liquid discharge of the liquid container decreases as the remaining power decreases.

3. The control method according to claim 2, wherein when the remaining power is lower than a second preset power, the liquid container is controlled to stop the liquid discharge; and wherein the second preset power is lower than the first preset power.

4. The control method according to claim 1, wherein controlling liquid discharge of the liquid container according to the remaining power comprises:
when the remaining power is lower than a second preset power, the liquid container stops discharging liquid.

5. The control method according to claim 4, wherein
when the liquid container stops discharging liquid, a liquid discharging time of a last liquid discharging from the liquid container is obtained, and a running time of the cleaning robot after the liquid container stops discharging liquid is determined according to the liquid discharging time.

6. A controller for a cleaning robot, comprising:
an obtaining unit, the obtaining unit being adapted to obtain a remaining power or a charging instruction of the cleaning robot;
a control unit, the control unit being adapted to control liquid discharge of a liquid container of the cleaning robot according to the remaining power or the charging instruction;
wherein when the liquid container stops discharging liquid, the cleaning robot is controlled to stop working or to charge after running for a preset time.

7. The controller according to claim 6, wherein
the controller is configured to control the liquid discharge of the liquid container to decrease as the remaining power decreases, when the remaining power is lower than a first preset power.

8. The controller according to claim 7, wherein
the controller is further configured to control the liquid container to stop the liquid discharge, when the remaining power is lower than a second preset power; and wherein the second preset power is lower than the first preset power.

9. The controller according to claim 6, wherein
the controller is configured to control the liquid container to stop the liquid discharge when the remaining power is lower than a second preset power.

10. The controller according to claim 9, wherein
the controller is further configured to obtain a liquid discharging time of a last liquid discharge from the liquid container and determine a running time of the cleaning robot after the liquid container stops discharging liquid according to the liquid discharging time, when the liquid container stops discharging liquid.
